(19)

Europäisches
Patentamt
European
Patent Office
Office européen
des brevets

(11) **EP 2 146 440 A2**

(12) **EUROPEAN PATENT APPLICATION**
published in accordance with Art. 153(4) EPC

(43) Date of publication:
**20.01.2010 Bulletin 2010/03**

(51) Int Cl.:
***H04B 3/54*** *(2006.01)*

(21) Application number: **08767021.2**

(22) Date of filing: **22.04.2008**

(86) International application number:
**PCT/RU2008/000249**

(87) International publication number:
**WO 2008/133548 (06.11.2008 Gazette 2008/45)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.04.2007 RU 2007115554**

(71) Applicants:
• **Zao "Electro-Kom"**
**Ul. Samokatnaya, 2A-1**
**Moscow, 111033 (RU)**
• **Ayzman, Mikhail Iosifovich**
**Kaluzhskaya pl., 1-45**
**Moscow, 119049 (RU)**

• **PLT Electro-Com, Limited**
**Wistaria House**
**46 Gladstone Street**
**Nicosia, 1095 (CY)**

(72) Inventors:
• **AYZMAN, Mikhail Iosifovich**
**119049 (RU)**
• **RADZIKOWSKI II, Henry Adam**
**Moscow, 121108 (RU)**

(74) Representative: **Lawrence, Richard Anthony et al**
**Keltie**
**Fleet Place House**
**2 Fleet Place**
**London EC4M 7ET (GB)**

(54) **METHOD FOR SENDING AND TAKING OFF A SIGNAL WITH DIGITAL DATA IN THE POWER DISTRIBUTION NETWORK OF A BUILDING**

(57) The invention relates to methods of transmitting digital data (e.g. Internet data, video, audio, voice and/or other data) via power supply systems by means of PLT (Power Line Telecommunication) technology. Its use makes it possible to obtain a technical result in the form of an increase in reliability and speed of transmission of digital data, as well as an increase in the degree of coverage of the rooms in a building (e.g. the flats in a block of flats) with a PLT signal with sufficient power for transmission of digital data. This result is achieved because injection of the digital signal into the electrical mains of the building is effected on a busbar forming part of the power-distributing system of the building. Moreover, the digital signal is injected at least at two points of the busbar. The distances between the points of injection of the digital signal can be established so as to ensure the necessary power of the signal with digital data throughout the power-distributing system of the building, formed from said busbar (e.g. the injection points are arranged uniformly along the busbar or using a special formula). 34 dependent claims, 2 drawings.

Fig. 2

EP 2 146 440 A2

## Description

### FIELD OF TECHNOLOGY

The invention relates to electrical communication engineering, namely to methods of supply and removal (hereinafter: injection) of digital data into the system for distributing electric power in a building. The invention also relates to the area of telecommunication technologies, namely to methods of transmitting information via power systems by means of PLT (Power Line Telecommunication) technology, also-called PLC (Power Line Communication or Power Line Carrier), PLN (Power Line Networking) or PAN (Power Area Networking) technology. The invention also relates to methods of transmitting high-frequency signals over electrical networks. The digital data to be transmitted can include communication data (e.g. Internet data; video, audio and voice data), telemetry data, control data and/or other digital data.

### PRIOR ART

There are extensive power supply grids in the Russian Federation (RF) and other countries. A fundamental advantage of this infrastructure is the ubiquitous character of electricity grids. Accordingly, the possibility of providing Internet access, voice communication and other forms of transmission of digital data over electricity grids is extremely promising. The fact that there is no need for additional cabling is an important factor in this. There is, understandably, interest in finding technical solutions for using electrical power grids as an alternative medium for transmission of digital data.

Various methods of telecommunication by means of electric power lines are well known from the prior art. Detailed information on classical methods of transmitting information over power transmission lines can be found in ("Fundamentals Handbook of Electrical and Computer Engineering: Communication Control Devices and Systems". John Wiley & Sons, 1983; Modern power station practice. Ed. British Electricity International, London, UK. Pergamon, 1991-1992, Multi-volume book). Some additional examples from the prior art will be presented.

A method is known for transmitting information via an electric power cable (Manstorfer K. Data transmission system for transmission of data on at least one power cable. Application EP 0889602 A2. IPC[6] H04B3/54. Prior. 03.07.1997. Publ. 07.01.1999). Input and output of digital data takes place in the terminal regions of the power cable, thus providing communication between two points located at the ends of the power cable. The medium transmitting the digital signal in the description of the known method is a section of the electric power cable (without branchings). For this reason the known method belongs to a group of methods of direct communication, mainly intended for purposes of remote acquisition of information on the operation of transformer substations and other electrical equipment over medium-voltage and high-voltage power cables. The basic drawback of the known method is that it cannot be used for injection of a PLT signal into the power-distributing system of a building. In fact, in branched power grids we observe losses of power of the PLT signal owing to branchings in the grid. Moreover, in buildings there is a considerable amount of noise interference, caused for example by switching on and off of electrical appliances. In its intensity, interference of this kind greatly exceeds the "ethereal" noise arising in unbranched electric cables. At limited power of the PLT signal supplied, this leads to low speed and insufficient reliability of transmission of information by the known method. Furthermore, in this case most rooms in the building are not covered by a PLT signal of sufficient power, which means that the known method is not suitable for use in branched power-distributing systems of buildings.

A method is also known for injection of a signal with digital data into a power-supply system in the section before a transformer substation (Kline P.A. Power line communication system and method of using the same. Patent US 6958680. IPC[6] H04B3/54. Prior. 16.04.2001. Publ. 25.10.2005). The essential feature of the known method is that input of digital data into a power-distributing system is carried out so that the point of injection of the digital signal is on a medium-voltage power line. Then a special shunt provides transmission of the digital data from the medium-voltage power system to the low-voltage power system. In this way the signal with the digital data is diverted to the low-voltage system, by-passing the transformer substation. Because the signal with digital data is fed to a section of the power grid in the direct vicinity of the transformer substation, the PLT signal goes simultaneously to all the electrical sockets of the block of houses supplied by this transformer substation. The main drawback of the known method is substantial attenuation of the PLT signal on the section of the power supply line from the transformer substation to the electric power sockets in the flats or offices of the building being supplied. This method does not envisage the possibility of repeat injection of the signal. This drawback means that use of the known method is not effective for injection of a signal with digital data in buildings with busbar topology of the power-distributing system (i.e. in the majority of residential buildings in the RF), since it gives low speed and reliability of transmission of digital data, and insufficient coverage of the rooms in the building by the PLT signal.

A method also exists for injection of a signal with digital data into the electrical system of a building (Crenshaw R.E., Grimes D.W., Larson P.L. Method and apparatus for attaching power line communications to customer premises. Application WO 2004/017621 A1. IPC[7] H04M11/04. Prior. 16.08.2002. Publ. 26.02.2004). This method is nearest to the proposal in technical essence and result achieved and is its prototype ("the prior art"). In carrying out the known method, injection of the signal with digital data is effected in the electrical distribution board of a building, from where the PLT signal is distributed with the wiring to all the rooms of the building. In this case, for combining the signal with three-phase mains in the building, a system is used that contains a device of carrier-frequency current, which creates a carrier signal for transmission over the power grid; a passive connecting device (a so-called passive coupler), constructed with possibility of connection to the distribution board. The main drawback of the known method is considerable remoteness of the end users from the injection point of the digital signal (the electrical distribution board). In multistorey buildings with busbar topology of the power-supply system this drawback once again causes low speed and reliability of transmission of the digital data, impossibility of complete coverage of the rooms with a PLT signal of the required power.

Once again it should be pointed out that in the RF and other countries, busbar topology of the power-distributing system of a building is typical. In this topology, electrical busbars are laid throughout the building, and wiring going directly to the rooms is branched from them. For example, with vertical arrangement of the busbars, branchings are effected on each floor. Accordingly, the distance from the injection point of the PLT signal (the electrical distribution board in the distribution cabinet on the ground floor or in the basement) to the user includes the distance along the busbar to the corresponding floor and then the length of the electrical wiring from the busbar to the point of connection of the user's electrical appliance to the power-supply system (to the electrical socket). Clearly, in multistorey buildings these distances will often come to tens of metres, and over such distances there is considerable attenuation of the PLT signal. The physical principles of this phenomenon are that power-supply systems of busbars with their high typical short-circuit currents and very low full resistances for high-frequency signals are low-resistance networks with a large number of branchings. In such networks, in contrast to ordinary cable lines, digital signals suffer severe attenuation even at distances of the order of 10 metres.

In addition, it must be borne in mind that the operation of hybrid grids is covered by international standards (e.g., Reg TP NB 30 - International Electromechanical Commission (IEC), Comité Européen de Normalisation Electrotechnique (CENELEC), EN50065-1, 1999) that impose substantial restrictions on the level of radiation from lines during data transmission. This means that the power of the high-frequency digital signal supplied cannot be increased without limit, there must be sensible management of the existing limited power of the PLT signal to be injected, in order to obtain sufficient power of the signal at each power point of the building. Therefore it would be desirable to inject the PLT signal as near as possible to the end user, thereby eliminating the risk of its excessive attenuation. Moreover, supplying a digital trunk line (e.g., fibre-optic cable) to each room in a building is too expensive. This defines the technical problem that is to be solved by the present invention.

## ESSENCE OF THE INVENTION

### *Brief description of the essence of the invention (disclosure of the invention)*

The technical problem to be solved by the present method is that, with limited power of a supplied signal with digital data, its injection is to be effected in such a way that acceptable power of the digital signal is achieved at reasonable cost throughout the power-distributing system of a building. According to the invention this problem is solved by the features of the independent claim. Corresponding preferred further embodiments of the invention are the subject of the dependent claims.

More precise definitions of some terminology will be provided for purposes of further description. In this area of industry, an electrical busbar is the name given to a distribution cable, laid throughout a building for connecting consumers to the electric power. A vertical electrical busbar is also often called a rising main (rising main busbar). Electrical wiring is branched from the electrical busbars and goes into the rooms of the building (e.g. residential premises - rooms, flats). Injection, in the present description and in the claims, means supply and/or removal of a signal with digital data to and/or from the power-supply system (the mains). Accordingly, injection will comprise any of the following: *a)* supply of a signal with digital data to the power-supply system, *b)* removal of a signal with digital data from the power-supply system, *c)* supply of a signal with digital data to the power-supply system and removal of a signal with digital data from the power-supply system. The English term "injection" is often used in literature with this meaning. The synonymous terms "aggregation" and "coupling" are used less often in the meaning of "aggregation/coupling of a PLT signal with a power-supply system". A digital signal prepared in some way for transmission and reception over a power-supply system will be called a PLT signal. For methods of preparation of signals with digital data for transmission and reception over a power-supply system, see for example (Bayliss C., Hardy B. Transmission and distribution electrical engineering. Elsevier, 2006; Modern power station practice. Ed. British Electricity International, London, UK. Pergamon, 1991-1992, Multi-volume book; Power line communication. From Wikipedia, the free encyclopaedia. http://en.wikipedia.org/wiki/Power_line_communication).

The essence of the invention is that injection of a signal with digital data into a power-distributing system of a building for subsequent transmission of the data via the mains by means of PLT technology is carried out as follows.

The digital signal is injected into the power-distributing system of the building from the digital line to an electrical busbar forming part of the power-distributing system of the building, moreover injection of the digital signal is effected at least at two points of said busbar. The distances between the points of signal injection can be established so as to provide the necessary power of the signal with digital data throughout the power-distributing system of the building, formed from said busbar.

*Aims of the invention.* The inventive concept forming the basis of the proposed method is directed at achieving the following main aims:

1. to increase the degree of coverage of the rooms in a building with a digital signal with sufficient power for transmission of digital data,
2. to increase the reliability of transmission of digital data by means of PLT technology in an inhomogeneous environment with a large number of branchings, such as the power-distributing system of buildings with busbar topology of organization of the electrical mains,
3. to increase the speed of transmission of digital data for the user throughout the power-distributing system of a building, formed from said busbar.

Attainment of these aims must be achieved at reasonable cost.

*Implementation of the invention.* The method is put into effect as follows. For implementing telecommunication technologies of broadband data packet switching over power-supply systems by the known methods, a carrier signal is created for subsequent transmission over the power grid by means of PLT technology. When transmitting digital data using PLT technology, a set of carrier frequencies is used (e.g. in the range 3-10 MHz) and a connection scheme such that if signal extinction occurs on one carrier, transmission of the data is compensated by the other carrier frequencies. The necessary operations are performed for data transmission/reception over the power-supply system and processing of the digital data by the hardware and software of group and individual equipment, used in telecommunication technologies for high-speed information exchange of data with service functions.

The digital line carrying the signal with digital data that is to be injected is brought to the building. The digital data to be transmitted can include communication data (Internet data, video, audio, and voice data, other data), telemetry data (e.g., digital data on consumption of water, gas, electricity, other utilities), control data (digital data used for controlling appliances in the home and building with accounting elements) and/or other types of digital data. Supply/removal of the signal with digital data (injection of the digital signal) in the electrical mains of a building is carried out at two or more points of the electrical mains of the building. For uniform distribution and delivery of the digital signal to different points of the busbar, it is possible to use coaxial cable, connected to the digital line.

The digital line, from which injection of the signal with digital data into the electrical mains of the building is carried out, is represented by any of the following or any combination of the following: *a)* wire trunk line, *b)* fibre-optic trunk line, *c)* trunk line using wireless access technology based on electromagnetic waves (e.g. radio waves), *d)* some other trunk line for high-speed transmission of digital data.

The digital signal is injected into any wire-based electrical system. Injection can be effected into any conductor of three-phase electrical mains or any combination of conductors of three-phase electrical mains, e.g. into *a)* first phase conductor, *b)* second phase conductor, *c)* third phase conductor, *d)* neutral conductor, *e)* earthing conductor. In this way the digital signal is injected into low-voltage or medium-voltage alternating-current mains. The digital signal can also be injected into direct-current mains.

The distances between the points of injection of the digital signal are established so as to provide the necessary power of the signal with digital data throughout the power-distributing system of the building, formed from said busbar. Any one of the following embodiments of the present invention is used for this:

1. the points of injection are distributed along the busbar uniformly,
2. the amplitude or power of the signal with digital data to be injected is monitored along the busbar, and where there is attenuation of the amplitude or power of the signal to a level below that specified, repeat injection of the signal is carried out,
3. the value of $\theta$ - the ratio of the amplitude of the signal with digital data after passing along the busbar to the amplitude of the digital signal to be injected, is measured, then the location of the first injection point of the digital signal is determined from the formula

$$x_1 = L \frac{\ln\left(2\sqrt{\theta} - \theta\right)}{\ln(\theta)} , \tag{1}$$

where $L$ is the length of the busbar, and the location of the second point of injection of the digital signal is calculated using the formula $x_2 = L - x_1$; by using this formula, it is possible to optimise the location of the two points of injection on the busbar. Any of the ends of the busbar is taken as the origin of the linear one-dimensional coordinate system, and the location of the points of injection $x_1$ and $x_2$ is determined relative to said end of the busbar.

Combinations of the aforementioned embodiments of the present invention are also possible. In all cases the distance between the points of injection of the digital signal is set in such a way that it is at least 2.5 metres. This is done for purposes of economical use of the limited power of the digital signal supplied.

When using any of the aforementioned embodiments of the present invention, the phenomenon of interference can additionally be taken into account. Then when determining the location of the points of injection on the busbar, the carrier wavelengths are taken into account, so as to provide amplification or at least minimum attenuation of the digital signal to be injected based on its wave properties. For this, the distance between the points of injection on the busbar is selected as a multiple of the carrier wavelength. Any of the following can be used for calculating the distance between the points of injection: a) minimum carrier wavelength, b) mean carrier wavelength, c) maximum carrier wavelength, d) a characteristic (e.g. any noteworthy) carrier wavelength, e) any other carrier wavelength.

When using any of the aforementioned embodiments of the present invention, additionally an iterative principle can be used. According to this principle, first on the basis of the aforementioned embodiments of the invention, the coordinates of the location of the points of injection are determined to a first approximation. Then, if necessary, any one of the points of injection of the digital signal is displaced slightly (as a rule, within the limits of a floor) in an arbitrary direction, in order to increase the quality of the digital signal at the power sockets of the building, which are used by users connected to the access service. In this way the location of the points of injection on the busbar of the building is defined more accurately.

Injection is effected by known methods (e.g. by methods of capacitive or inductive injection). For details of injection, see for example in (Bayliss C., Hardy B. Transmission and distribution electrical engineering. Elsevier, 2006; Modern power station practice. Ed. British Electricity International, London, UK. Pergamon, 1991-1992, Multi-volume book).

The minimum number of points of injection of the digital signal is selected; this is determined by the type of busbars in the building and their condition. Thus, the better the condition of the busbars, the smaller the number of points of injection required. Similarly, the larger the diameter of the busbar and the more uniformly the cable is laid in it, the smaller the number of points of injection necessary for providing a specified power of the PLT signal in the rooms of the building. The minimum number of points of injection of the digital signal also depends on the number of floors in the building. Moreover, the number of points of injection is proportional to the height of the building. In practice, one injection per 3-6 floors proves sufficient.

It is also important to take into account that as a rule there is more than one busbar in a building (e.g. one per entrance). In such a case the present method is repeated if necessary for each busbar.

The most preferred embodiments of the invention should also be noted. The present invention can be used for the supply and removal of a signal with digital data in the power-distributing system of a building in conditions of providing broadband and narrowband access. Broadband access is as a rule used in the area of telecommunications, and narrowband in the area of telemetry and control.

We shall examine the aforementioned three embodiments of the present invention in more detail.

*1. Uniform distribution of the points of injection along the busbar*

After selecting the minimum number of points of injection (at least two), the points of injection are distributed uniformly along each busbar. For example, in the case of two-point injection, the points of injection are arranged on the busbar in such a way that the distance between them and from the ends of the busbar are equal to $L$/3. If injection is carried out at three points, the distances between them and from the ends of the busbar must be equal to U4. With a larger number of points of injection, the calculations are carried out similarly.

In a number of cases such an approach proves sufficient for optimum distribution of a PLT signal over the power-distributing system of a building, formed from an injectable busbar. If this is not so, another embodiment of the invention is used (see below).

When carrying out the invention in the case of uniform distribution of the points of injection along the busbar, it is taken into account that interference of the PLT signal within the busbar is possible during injection. Interference of the digital signal arises, in particular, owing to repeat injection at different points of the busbar. Therefore when selecting the distances between the points of injection it may be necessary to take into account the wavelengths of the components of the carrier signal. As a result of interference, on connecting the next injection at certain points of the electrical system of the building, the power of the signal becomes lower than before its connection. Moreover, each connection of a new injection "takes" some of the supplied power of the digital signal (e.g. from a coaxial cable), which reduces the signal power at other points of injection. As a result, the power of the digital signal at certain points of the electrical system may be lower than is permissible.

Accordingly, injection is carried out in such a way that when using the existing hardware and software, interference does not lead to substantial impairment of the signal.

*2. The amplitude or power of the signal with digital data to be injected is monitored along the busbar, and where there is attenuation of the amplitude or power of the signal to a level below that specified, repeat injection of the digital signal is carried out*

The signal is injected in an arbitrarily selected section of the busbar (usually it is several metres away from one of the ends of the busbar). Then the drop in amplitude or power of the signal is monitored along the busbar. To a first approximation this drop is described by a monoexponential curve. Where there is attenuation of the amplitude or power of the signal to a level below that specified, repeat injection of the digital signal is carried out, which makes it possible to achieve the necessary increase in amplitude or power of the digital signal at a distance from the first injection point.

*3. The distance between the points of injection is determined from a special formula, making it possible to optimise the location of the points of injection along the busbar*

First, the value of $\theta$ - the ratio of the amplitude of the signal with digital data after passing along the busbar to the amplitude of the digital signal to be injected, is measured. The parameter $\theta$ can be calculated, for example, as follows. In the case of single-point injection of the digital signal, the power of the PLT signal ($P_1$) is measured at a distance of several floors from the injection point. Then the ratio $P_1/P_0$ is determined (less than unity), where $P_0$ is the power of the PLT signal at the injection point. The square root of the ratio $P_1/P_0$ is calculated. The proportion of the length of the rising main ($L$) occupied by the distance between the injection point and the point where $P_1$ was measured, is determined, i.e. the ratio $z = L/l$ is calculated, where $L$ is the length of the rising main, and $l$ is the distance between the injection point and the point where $P_1$ was measured. If, for example, the drop in signal power was assessed at a distance equal to a third of the length of the rising main, then $z = 3$. Then parameter $\theta$ is calculated as

$$\theta = \left( \sqrt{\frac{P_1}{P_0}} \right)^z . \qquad\qquad (2)$$

For more details on determination of the quantity $\theta$ see the Appendix.

Note that the example given for calculation of the quantity $\theta$ uses the power of the digital signal to be injected, not the amplitude. Here, $\theta$ is the ratio of the square root of the power of the signal with digital data after passing along the busbar to the square root of the power of the signal with digital data to be injected, which follows from principles of electrodynamics. If we use data on the amplitude of the digital signal, formula (2) similarly assumes the form:

$$\theta = \left( \frac{A_1}{A_0} \right)^z ,$$

where $A_0$ is the amplitude of the PLT signal at the injection point;

   $A_1$ is the amplitude of the PLT signal at the selected distance from the injection point.

In many cases it is possible to use data for the quantity θ obtained previously.

Then the coordinate of the location of the first injection point of the digital signal is determined from the formula

$$x_1 = L \frac{\ln\left(2\sqrt{\theta} - \theta\right)}{\ln(\theta)}, \tag{3}$$

where *L* is the length of the busbar. The coordinate of the location of the second point of injection of the digital signal is calculated using the formula

$$x_2 = L - x_1. \tag{4}$$

Here $x_1$ and $x_2$ are the coordinates of the location of the first ($x_1$) and second ($x_2$) points of injection on the injectable busbar, any of the ends of which is taken as the origin.

When using these formulae, the amplitude of the signal with digital data to be injected is determined as any of the following or any combination of the following: *a)* amplitude of the digital signal to be injected with fixed carrier wavelength, *b)* mean amplitude of the spectrum of the digital signal to be injected in the selected range of carrier wavelengths, *c)* integral amplitude of the digital signal to be injected in the selected range of carrier wavelengths, *d)* the amplitude is determined in any other way. Similarly the power of the signal with digital data to be injected is determined as any of the following or any combination of the following: *a)* power of the digital signal to be injected with fixed carrier wavelength, *b)* mean power of the spectrum of the digital signal to be injected in the selected range of carrier wavelengths, *c)* integral power of the digital signal to be injected in the selected range of carrier wavelengths, *d)* the power is determined in any other way.

Use of the above formulae makes it possible to optimise the location of two injection points on the busbar. The derivation of the formulae is given in the Appendix.

In concluding this section of the description it must be pointed out that the point of connection of a consumer to the power supply is any of the following or any combination of the following: *a)* electric power socket, *b)* plug and socket unit, *c)* terminal, *d)* some other connecting device.

## INFORMATION CONFIRMING THE POSSIBILITY OF CARRYING OUT THE INVENTION

Injection of a digital signal in a 12-storey block of flats, located in Moscow, was carried out by the proposed method. Injection was effected from a high-speed digital line by means of coaxial cable into three phases of the power system. Capacitive couplers were used for injection. The power of the digital signal was measured with a "Propower-5" spectrum analyser made by the Spanish company Promax Electronica, S.A.

The digital signal was injected: *a)* at one point of one busbar (at the level of the 6th floor), *b)* at two points of one busbar of homes located at the level of the 1st and 12th floors of the building. In addition, for comparison with the prior art (Crenshaw R.E., Grimes D.W., Larson P.L. Method and apparatus for attaching power line communications to customer premises. Application WO 2004/017621 A1. IPC[7] H04M11/04. Prior. 16.08.2002. Publ. 26.02.2004), the digital signal was injected into the distribution board (feed and distribution device).

Selection of the levels for locating the points of injection of the digital signal (1 st and 12th floors) was based on calculations performed using formulae (3) and (4) for determining the coordinates of the optimum location of two points of injection of the digital signal along the busbar. It was taken into account that the length of the busbar in this building is of the order of 38 metres, and the value of θ was taken as close to 0.8, based on previous measurements. For this value of θ the coordinates $x_1$ and $x_2$, determined from formulae (3) and (4), are of the order of 1 and 37 metres, which corresponds to the 1 st and 12th floors of the chosen building.

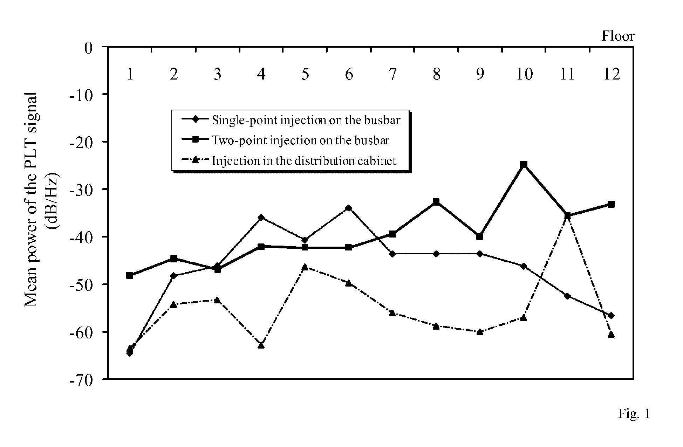

Based on actual measurements, the following data were obtained (Fig. 1). The mean power of the digital signal with two-point injection on the entire length of the busbar was not less than -48 dB/Hz, the typical value of this index was about -40 dB/Hz, and uniform distribution of signal power along the busbar was observed. It was established that the threshold value of the mean signal power, necessary for transmission of digital data, is -50 dB/Hz. Therefore the present method makes it possible to achieve the claimed technical result.

With single-point injection at the level of the 6th floor, the distribution along the busbar was far less uniform: the signal power at the level of injection was quite high, but at the ends of the busbar (below the 3rd and above the 10th floor) it was less than is permissible. This leads to the conclusion that it is impossible to provide, by means of single-point injection, the necessary quality of the digital signal on the lower and upper floors.

With signal injection at the level of the distribution board, as proposed by the authors of the method of the prototype (prior art), the power of the digital signal is insufficient for reliable data transmission for practically the entire length of the busbar. The random spike of signal power at the level of the 11 th floor should be noted. The location of this spike is unpredictable and may vary over time, which is apparently connected with terminal interference of the PLT signal. Therefore the presence of a random power spike of the digital signal at the level of the 11 th floor does not mean it is possible to use the method of the prior art for reliable transmission of digital data.

Accordingly, injection of a digital signal by the proposed method gave far higher quality of the PLT signal compared with the prior art, and incomparably larger coverage of the rooms with a signal of sufficient power for fast, reliable transmission of digital data.

In conclusion, it should be noted that the example given does not exhaust all possibilities of injection of a signal with digital data into an electrical system. A person skilled in the art may find modifications of the present invention, which are still within the scope of the appended claims or equivalent positions. If such modifications are found, the essence of the invention in the application remains unchanged.

Any of the circumstances (including those qualified as features of the present invention), given in any of the following: *1)* in the section of the description "Field of technology", 2) in the section of the description "Prior art", 3) in the section of the description "Essence of the invention", 4) in the section of the description "Information confirming the possibility of carrying out the invention", 5) in the Appendix, 6) in the abstract - can be and if necessary will be included in the claims of the present invention. This last sentence should be regarded as an indication of the need for the features of the invention presented in the aforementioned sections of the description and in the abstract to be included in the claims.

*Acknowledgments.* The inventors consider it their pleasant duty to express their sincere gratitude to Roman Vladimirovich Korabelshchikov, head of the PLC laboratory of the "Elektro-Kom" private joint-stock company and to Ivan Nikolaevich Sviridov, director of the network development department of the "Elektro-Kom" private joint-stock company, who provided necessary technical assistance in performing the measurements and verifying the feasibility of the present invention in real conditions.

**APPENDIX**

**DERIVATION OF FORMULAE FOR THE OPTIMUM LOCATION OF THE POINTS OF INJECTION OF THE PLT SIGNAL**

The system for injection of a signal with digital data inside a building consists of two components - an electrical busbar and a tapping from it to the rooms (e.g. flats). The decrease in amplitude of the power component of the phase current $V_i(t)$ along the busbar is insignificant. However, the amplitude of a high-frequency PLT signal, to be injected into the phase current, $V_2(t)$, is attenuated more perceptibly on passing along the wiring, and this attenuation obeys an exponential law with a rate of attenuation that depends on the carrier frequency, $\omega_n$.

If at the point of connection to the busbar the amplitude of $V_2(t)$ is equal to $A_c$, then at a power socket (or other point of connection), connected to the busbar along a line inside the flat of length $l$, it will be

$$A_c e^{-\alpha l \omega n} .$$

In this expression the constant $\alpha$ is the rate of attenuation of the PLT signal within the wiring inside the flat.

Consider a vertical busbar of length $L$ and the associated coordinate system, such that a point with coordinate $x$ is located at a distance $x$ from one of the ends (e.g. the upper end) of the busbar. The constant $\beta$ corresponds to the rate of attenuation when a PLT signal of the carrier frequency under consideration passes along the busbar. (Clearly any nature of location of the busbar is possible: vertical, horizontal or inclined. In this case one of the ends of the busbar is taken as the origin (coordinate $x = 0$), from which the coordinates of the location of the points of injection of the digital signal are reckoned.)

Then if a signal of amplitude A is fed to the busbar via a point with the coordinate $x$, and the wiring inside the flat - via a point with the coordinate $y$, then at the electrical socket the high-frequency signal will have amplitude

$$A e^{-(\alpha l + \beta |x-y|)\omega_n} .$$

As the magnitude of the drop in amplitude of the PLT signal during passage along the wiring inside the flat does not depend on how the signal is injected on the busbar (for a specified length $l$) and does not depend on the manner of connection of the busbar to the digital line, we shall no longer pay special attention to this term.

If the busbar is connected to the digital trunk line via $n$ points with coordinates $x_k$ and all the connections have identical amplitude of the PLT signal, equal to $A$, then at the point with coordinate $y$ the amplitude of the PLT signal will be equal to

$$A \sum_{k=1}^{n} e^{-(\beta |x_k - y|)\omega_H}.$$

Since, at any point of the busbar, the amplitude of the PLT signal must not be greater than a certain maximum value $A_{max}$, the problem of selecting the best points of connection $x_k$ with specified number $n$ can be formulated thus: it is necessary to find a set of coordinates of the points of connection $x_k$ such that the relation

$$f(\{x_k\}) = \min_{y \in [0,L]} \left( \sum_{k=1}^{n} e^{-(\beta |x_k - y|)\omega_H} \right) \Big/ \max_{y \in [0,L]} \left( \sum_{k=1}^{n} e^{-(\beta |x_k - y|)\omega_H} \right)$$

has a maximum value.

In order to make the magnitude of the drop in amplitude more tangible, let us put $\theta = e^{-\beta L \omega H}$. Here $\theta$ is the drop in amplitude of the PLT signal of a specified frequency on passing along the busbar ($\theta < 1$). When determining the technical parameters of a busbar it may be difficult to measure the drop in amplitude of the PLT signal along the entire busbar. Since the amplitude falls exponentially, from the magnitude of the drop on some fraction of the busbar we can find the magnitude of the drop in amplitude of the PLT signal on passing along a section of the busbar of a different length. In particular, if $\theta_z$ is the magnitude of the drop in amplitude on passing along a section of the busbar of length $L/z$, then $\theta_z = \sqrt[z]{\theta}$. Hence $\theta = \theta_z{}^z$.

Since $f$ and $g$ are smooth functions, their extrema can either be at those points where the derivative is equal to zero, or at the boundaries of the region $x_k \in [0,L]$.

The problem of optimisation of the relation of the maximum and minimum amplitude of the signal will be solved below. If the relation is optimised with respect to any monotonic function (e.g. with respect to the exponent, with respect to a logarithmic function or any other), the optimum points of injection will be located on the busbar in the same place.

*1 Solution of the optimisation problem for single-point injection*

Since $\max_{y \in [0,L]} \left( e^{-(\beta |x - y|)\omega_H} \right)$ is achieved at point $x = y$, the denominator of the expression

$$f(\{x_k\}) = \min_{y \in [0,L]} \left( \sum_{k=1}^{n} e^{-(\beta |x_k - y|)} \right) \Big/ \max_{y \in [0,L]} \left( \sum_{k=1}^{n} e^{-(\beta |x_k - y|)} \right)$$

does not depend on the coordinate $x$, while for the numerator the maximum of the minimum value of signal power is at $x = L/2$. For optimum single-point connection the maximum drop in amplitude of a high-frequency signal is equal to

$e^{-\beta L_\omega H/2}$, or $f = \sqrt{\theta}$. Consequently, with single-point injection the injection point of the PLT signal must be located at the mid-point of the busbar.

*2 Solution of the optimisation problem described above for two-point injection*

*Consider*

$$\Psi(x_1, x_2) = \max_{y \in [0,L]} \left( e^{-(\beta|x_1-y|)\omega_{_H}} + e^{-(\beta|x_2-y|)\omega_{_H}} \right).$$

Without restricting generality, we shall assume $x_1 \leq x_2$ (here $x_2$ is the injection point that is located farther from the start of the busbar).

We shall introduce the variable $d$, such that $d > 0$. Then

$$e^{-(\beta|x_1-(x_1-d)|)\omega_{_H}} = e^{-(\beta|x_1-(x_1+d)|)\omega_{_H}},$$

whereas

$$e^{-(\beta|x_2-(x_1-d)|)\omega_{_H}} < e^{-(\beta|x_2-(x_1+d)|)\omega_{_H}}.$$

Therefore the maximum value of the function

$$e^{-(\beta|x_1-y|)\omega_{_H}} + e^{-(\beta|x_2-y|)\omega_{_H}}$$

is reached at point $y \in [x_1, x_2]$, and the maximum of the function

$$h(y) = e^{(\beta(x_1-y))\omega_{_H}} + e^{-(\beta(x_2-y))\omega_{_H}}$$

can be found on this section.

Then

$$\frac{dh}{dy} = -(\beta\omega_{_H})e^{(\beta(x_1-y))\omega_{_H}} + (\beta\omega_{_H})e^{-(\beta(x_2-y))\omega_{_H}},$$

and the derivative is equal to zero at

$$0 = -(\beta\omega_{_H})e^{(\beta(x_1-y))\omega_{_H}} + (\beta\omega_{_H})e^{-(\beta(x_2-y))\omega_{_H}},$$

from where

$$e^{(\beta(x_1-y))\omega_H} = e^{-(\beta(x_2-y))\omega_H}$$

and

$$y = (x_1 + x_2)/2.$$

Since at this point the second derivative

$$\frac{d^2h}{dy^2} = \left(\beta\omega_H\right)^2 e^{(\beta(x_1-y))\omega_H} + \left(\beta\omega_H\right)^2 e^{-(\beta(x_2-y))\omega_H}$$

is positive, the point $y = (x_1 + x_2)/2$ is a local minimum. Therefore the maximum value of function h is reached at the boundary of the domain, or

$$\Psi(x_1, x_2) = 1 + e^{-(\beta(x_2-x_1))\omega_H} \; ,$$

where, as before, $x_1 \leq x_2$. We thus find confirmation that, in two-point injection, as in single-point, the maxima of the power of the PLT signal occur at the points of injection.
Consider

$$\psi(x_1, x_2) = \min_{y \in [0,L]} \left( e^{-(\beta|x_1-y|)\omega_H} + e^{-(\beta|x_2-y|)\omega_H} \right).$$

In accordance with the results presented above for the magnitude of the derivative of the function

$$h(y) = e^{-(\beta|x_1-y|)\omega_H} + e^{-(\beta|x_2-y|)\omega_H}$$

a minimum can be reached at three points: *a)* $y = 0$, *b)* $y = L$, *c)* $y = (x_1 + x_2)/2$. Here $y$ is the coordinate of the location on the busbar of the point of connection of the wiring inside a flat. If $y = 0$, this means the start of the busbar.
At $y = 0$ we have:

$$\psi = e^{-\beta x_1 \omega_H} + e^{-\beta x_2 \omega_H} \; ,$$

at $y = L$:

$$\psi = e^{-\beta(L-x_1)\omega_H} + e^{-\beta(L-x_2)\omega_H} \; ,$$

and at $y = (x_1 + x_2)/2$:

$$\psi = 2e^{-\beta(x_2 - x_1)\omega_н/2}.$$

In this way three local minima of function $h$ were obtained. The overall minimum is one of these.

Let us find the maximum of $f = \psi/\Psi$. First consider variations of $x_1$ and $x_2$ such that the difference $x_2 - x_1$ does not change, i.e. $x_2 = b + x_1$, where $b$ is fixed. In other words, the distance between the points of injection is fixed, but the points themselves are displaced in an arbitrary direction along the busbar. Then

$$\Psi(x_1, x_2) = 1 + e^{-(\beta d)\omega_н},$$

i.e. does not depend on $x_1$, and the maximum of $f$ is reached at the same $x_1$ as the maximum of $\psi$.

If case c) is achieved, in which $y = (x_1 + x_2)/2$, then (within these limits) variation of $b$ does not lead to variation of $\psi$. If not, $\psi$ is equal to the minimum of

$$e^{-\beta x_1 \omega_н} + e^{-\beta(d + x_1)\omega_н}$$

and

$$e^{-\beta(L - x_1)\omega_н} + e^{-\beta(L - x_1 - d)\omega_н}.$$

Since with increase in $x_1$ the first expression decreases, but the second increases, the maximum of their minimum will occur for equality of

$$e^{-\beta x_1 \omega_н} + e^{-\beta(d + x_1)\omega_н} = e^{-\beta(L - x_1)\omega_н} + e^{-\beta(L - x_1 - d)\omega_н},$$

which occurs at $x_1 + b/2 = L/2$. Therefore it can be assumed, for any variants, that with optimum selection $x_2 = L - x_1$. Thus, the optimum location of two points of injection presupposes symmetry of their location on the busbar.

Let us now examine the parameterization of $x_2 = L - x_1$, where $x_1$ is a free parameter. Then

$$\Psi(x_1, x_2) = 1 + e^{-(\beta(L - 2x_1))\omega_н},$$

and $\psi$ is equal to the minimum of

$$h(y) = e^{-(\beta|x_1 - y|)\omega_н} + e^{-(\beta|x_2 - y|)\omega_н}$$

at points $y = 0$ and $y = (x_1 + x_2)/2$ (since the cases $y = 0$ and $y = L$ give an identical value).

In the case $y = 0$ we find that

$$h = e^{-\beta x_1 \omega_н} + e^{-\beta(L - x_1)\omega_н},$$

and in the case $y = (x_1 + x_2)/2$, we get

$$h = 2e^{-\beta(L/2-x_1)\omega_H}.$$

If the case $y = 0$ is achieved, then for $f = \psi/\Psi$

$$f = \left(e^{-\beta x_1\omega_H} + e^{-\beta(L-x_1)\omega_H}\right)/\left(1 + e^{-(\beta(L-2x_1))\omega_H}\right) = e^{-\beta x_1\omega_H}.$$

If the case $y = (x_1 + x_2)/2$ is achieved, then

$$f = \left(2e^{-\beta(L/2-x_1)\omega_H}\right)/\left(1 + e^{-(\beta(L-2x_1))\omega_H}\right).$$

If we put $q = \ell^{-\beta x_1\omega_H}$, then for the case $y = 0$ we have $f = q$, and for the case $y = (x_1 + x_2)/2$ we have

$$f = \left(2q^{-1}e^{-\beta(L/2)\omega_H}\right)/\left(1 + q^{-2}e^{-(\beta(L))\omega_H}\right).$$

As can easily be verified, at values of q from 0 to 1 the derivative of the second expression $f(q)$ is negative. Therefore the maximum of the two expressions for $f$ is obtained when they are equal, i.e.

$$\left(2q^{-1}e^{-\beta(L/2)\omega_H}\right)/\left(1 + q^{-2}e^{-(\beta(L))\omega_H}\right) = q,$$

from where

$$2q^{-2}e^{-\beta(L/2)\omega_H} = 1 + q^{-2}e^{-(\beta(L))\omega_H}, \quad q^{-2}\left(2e^{-\beta(L/2)\omega_H} - e^{-(\beta(L))\omega_H}\right) = 1$$

and

$$q = \sqrt{2e^{-\beta(L/2)\omega_H} - e^{-(\beta(L))\omega_H}},$$

or, in terms of the maximum drop in amplitude $\theta$,

$$q = \sqrt{2\sqrt{\theta} - \theta}.$$

Moreover, since

$$q = e^{-\beta x_1\omega_H} = e^{-\beta L(x_1/L)\omega_H} = \theta^{x_1/L},$$

we have

$$\theta^{x_1/L} = \sqrt{2\sqrt{\theta} - \theta} \, ,$$

from where

$$\theta^{x_1/L} = \sqrt{2\sqrt{\theta} - \theta}$$

and

$$(x_1/L)\ln(\theta) = \ln\left(\sqrt{2\sqrt{\theta}-\theta}\right) = \frac{1}{2}\ln\left(2\sqrt{\theta}-\theta\right)$$

Therefore the optimum connection of the PLT signal should be made at points

$$x_1 = \frac{L}{2} \cdot \frac{\ln\left(2\sqrt{\theta}-\theta\right)}{\ln\theta}$$

and

$$x_2 = L - x_1.$$

Then the maximum drop in amplitude of the PLT signal on the busbar will be:

$$\sqrt{2\sqrt{\theta}-\theta} \, .$$

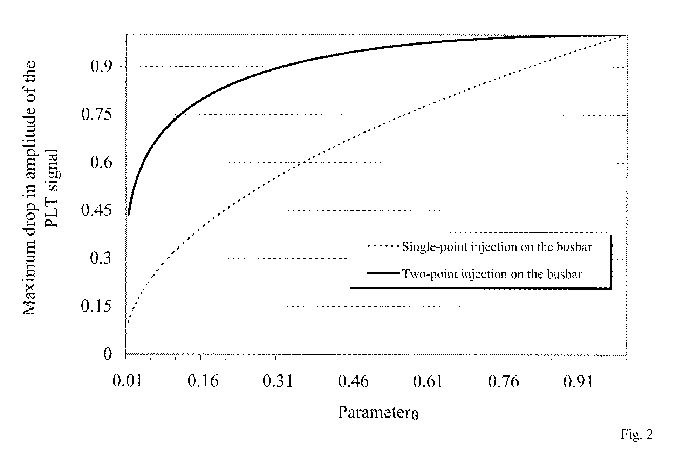

For an illustration of the advantage of two-point over single-point injection, see Fig. 2.

**LIST OF DRAWINGS**

Fig. 1. Results of actual measurements of the mean power of the digital signal in various methods of injection into one of the busbars of a 12-storey building.
Fig. 2. Graph of the maximum drop in amplitude of the PLT signal in single-point and two-point signal injection along the busbar. It can be seen that two-point signal injection, effected according to formulae (3) and (4), is of far higher quality than single-point injection.

**Claims**

1.  Method of supplying and removing a signal with digital data in the power-distributing system of a building with implementation of telecommunication technologies of packet switching of digital data over a power-supply system by means of PLT (Power Line Telecommunication) technology, **characterised in that** supply/removal of the signal with digital data (hereinafter: injection of the digital signal) in the power-distributing system of a building is carried out from a digital trunk line onto a busbar forming part of the power-distributing system of the building, moreover injection of the digital signal is effected at least at two points of said busbar, and the distance between the points of injection of the digital signal is established such that it is at least 2.5 metres.

2. Method according to Claim 1, **characterised in that** the digital trunk line from which injection of the signal with digital data into the electrical mains of the building is carried out, is represented by any of the following or any combination of the following: *a)* a wire trunk line, *b)* a fibre-optic trunk line, *c)* a trunk line using wireless access technology based on electromagnetic waves (e.g. radio waves), *d)* some other trunk line for high-speed transmission of digital data.

3. Method according to Claim 1, **characterised in that** the signal is injected into any conductor of three-phase mains or any combination of conductors of three-phase mains.

4. Method according to any one of Claims 1-3, **characterised in that** the signal is injected into any of the following or any combination of the following: *a)* the first phase conductor, *b)* the second phase conductor, *c)* the third phase conductor, *d)* the neutral conductor, *e)* the earthing conductor.

5. Method according to any one of Claims 1-3, **characterised in that** the signal is injected into any wire-based electrical system.

6. Method according to Claim 5, **characterised in that** the signal is injected into direct-current mains.

7. Method according to Claim 5, **characterised in that** the signal is injected into low-voltage or medium-voltage alternating-current mains.

8. Method according to Claim 5, **characterised in that** the point of connection of a consumer to the power supply is any of the following or any combination of the following: *a)* an electric power socket, *b)* a plug and socket unit, *c)* a terminal, *d)* some other connecting device.

9. Method according to Claim 1, **characterised in that** the injection points are distributed uniformly along the busbar.

10. Method according to Claim 9, **characterised in that** two injection points are distributed uniformly along the busbar.

11. Method according to Claim 9, **characterised in that** three injection points are distributed uniformly along the busbar.

12. Method according to Claim 9, **characterised in that** four injection points are distributed uniformly along the busbar.

13. Method according to Claim 9, **characterised in that** more than four injection points are distributed uniformly along the busbar.

14. Method according to Claim 1, **characterised in that** the amplitude or the power of the signal with digital data to be injected is monitored along the busbar, and where there is attenuation of the amplitude or power of the signal to a level below that specified, repeat injection of the signal is carried out.

15. Method according to Claim 1, **characterised in that** the quantity θ, the ratio of the amplitude of the signal with digital data after passing along the busbar to the amplitude of the digital signal to be injected, is measured, then the coordinates of the location of the points of injection on the busbar are determined from the following formulae:

$$x_1 = L \frac{\ln\left(2\sqrt{\theta} - \theta\right)}{\ln(\theta)},$$

$$x_2 = L - x_1,$$

where L is the length of the busbar, $x_1$ and $x_2$ are the coordinates of the location of the first ($x_1$) and second ($x_2$) points of injection on the injectable busbar, any of the ends of which is taken as the origin $x$.

16. Method according to Claim 1, **characterised in that** previously obtained data for the quantity θ (ratio of the amplitude of the signal with digital data after passing along the busbar to the amplitude of the digital signal to be injected) are used, then the coordinates of the location of the points of injection on the busbar are determined from the following formulae:

$$x_1 = L \frac{\ln\left(2\sqrt{\theta} - \theta\right)}{\ln(\theta)},$$

$$x_2 = L - x_1,$$

where L is the length of the busbar, $x_1$ and $x_2$ are the coordinates of the location of the first ($x_1$) and second ($x_2$) points of injection on the injectable busbar, any of the ends of which is taken as the origin $x$.

17. Method according to either of Claims 15 and 16, **characterised in that** the amplitude of the signal with digital data to be injected is determined as any of the following or any combination of the following: *a)* amplitude of the digital signal to be injected with a fixed carrier wavelength, *b)* spectrum mean amplitude of the digital signal to be injected in the selected range of carrier wavelengths, *c)* integral amplitude of the digital signal to be injected in the selected range of carrier wavelengths, *d)* in any other way.

18. Method according to either of Claims 15 and 16, **characterised in that** θ is the ratio of the square root of the power of the signal with digital data after passing along the busbar to the square root of the power of the signal with digital data to be injected.

19. Method according to Claim 18, **characterised in that** the power of the signal with digital data to be injected is determined as any of the following or any combination of the following: *a)* power of the digital signal to be injected with fixed carrier wavelength, *b)* spectrum mean power of the digital signal to be injected in the selected range of carrier wavelengths, *c)* integral power of the digital signal to be injected in the selected range of carrier wavelengths, *d)* in any other way.

20. Method according to any one of Claims 1-3, 6-16, and 19, **characterised in that** the location of the points of injection is if necessary defined more precisely, by displacing one or both of them in an arbitrary direction by an arbitrary distance along the busbar, achieving the necessary signal power at the points of connection of the consumer to the power supply.

21. Method according to Claim 17, **characterised in that** the location of the points of injection is if necessary defined more precisely, by displacing one or both of them in an arbitrary direction by an arbitrary distance along the busbar, achieving the necessary signal power at the points of connection of the consumer to the power supply.

22. Method according to Claim 18, **characterised in that** the location of the points of injection is if necessary defined more precisely, by displacing one or both of them in an arbitrary direction by an arbitrary distance along the busbar, achieving the necessary signal power at the points of connection of the consumer to the power supply.

23. Method according to any one of Claims 1-3, 6-16, 19, 21, and 22, **characterised in that** when determining the location of the points of injection on the busbar, the carrier wavelengths are taken into account, in order to ensure minimum attenuation of the digital signal to be injected based on its wave properties.

**24.** Method according to Claim 23, **characterised in that** the distance between the points of injection on the busbar is selected as a multiple of the carrier wavelength.

**25.** Method according to Claim 20, **characterised in that** when determining the location of the points of injection on the busbar, the carrier wavelengths are taken into account, in order to ensure minimum attenuation of the digital signal to be injected based on its wave properties.

**26.** Method according to Claim 25, **characterised in that** the distance between the points of injection on the busbar is selected as a multiple of the carrier wavelength.

**27.** Method according to any one of Claims 1-3, 6-16, 19, 21, and 22, **characterised in that** when determining the location of the points of injection on the busbar, the carrier wavelengths are taken into account, in order to ensure amplification of the digital signal to be injected based on its wave properties.

**28.** Method according to Claim 27, **characterised in that** the distance between the points of injection on the busbar is selected as a multiple of the carrier wavelength.

**29.** Method according to Claim 20, **characterised in that** when determining the location of the points of injection on the busbar, the carrier wavelengths are taken into account, in order to ensure amplification of the digital signal to be injected based on its wave properties.

**30.** Method according to Claim 29, **characterised in that** the distance between the points of injection on the busbar is selected as a multiple of the carrier wavelength.

**31.** Method according to any one of Claims 24, 26, 28, and 30, **characterised in that** the distance between the points of injection on the busbar is selected as a multiple of the minimum carrier wavelength.

**32.** Method according to any one of Claims 24, 26, 28, and 30, **characterised in that** the distance between the points of injection on the busbar is selected as a multiple of the mean carrier wavelength.

**33.** Method according to any one of Claims 24, 26, 28, and 30, **characterised in that** the distance between the points of injection on the busbar is selected as a multiple of the maximum carrier wavelength.

**34.** Method according to any one of Claims 24, 26, 28, and 30, **characterised in that** the distance between the points of injection on the busbar is selected as a multiple of the characteristic carrier wavelength.

**35.** Method according to any one of Claims 24, 26, 28, and 30, **characterised in that** the distance between the points of injection on the busbar is selected as a multiple of any other carrier wavelength.

Fig. 1

Fig. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0889602 A2
- US 6958680 B
- WO 2004017621 A1

**Non-patent literature cited in the description**

- Fundamentals Handbook of Electrical and Computer Engineering: Communication Control Devices and Systems. John Wiley & Sons, 1983
- Modern power station practice. Pergamon, 1991
- **Bayliss C. ; Hardy B.** Transmission and distribution electrical engineering. Elsevier, 2006
- Modern power station practice. Ed. British Electricity International. Pergamon, 1991